# EUROPÄISCHE PATENTSCHRIFT

(11) **EP 3 076 109 B1**
(45) Veröffentlichungstag und Bekanntmachung des Hinweises auf die Patenterteilung: **07.07.2021**
(21) Anmeldenummer: 16155249.2
(22) Anmeldetag: 11.02.2016
(51) Int. Cl.: F25D 17/02

(54) **KÜHLSYSTEM UND VERFAHREN ZUM BETREIBEN DES KÜHLSYSTEMS**
COOLING SYSTEM AND METHOD FOR OPERATING THE COOLING SYSTEM
SYSTEME DE REFROIDISSEMENT ET PROCEDE DE FONCTIONNEMENT DU SYSTEME DE REFROIDISSEMENT

(30) Priorität: 30.03.2015 DE 102015104901; 10.11.2015 DE 102015119362
(43) Veröffentlichungstag der Anmeldung: 05.10.2016
(73) Patentinhaber: Viessmann Refrigeration Solutions GmbH, 35108 Allendorf (DE)
(72) Erfinder: Brockmann, Robert, 60316 Frankfurt (DE); Vaupel, Manfred, 35066 Frankenberg (DE); Bühring, Andreas, 79100 Freiburg (DE)
(74) Vertreter: Sperschneider, Alexandra

(56) Entgegenhaltungen:
- WO-A2-2005/024314
- DE-A1- 10 361 686
- DE-A1- 19 904 667
- DE-A1-102005 061 599
- JP-A- H10 103 834
- JP-A- H10 274 463
- US-A- 2 141 715
- US-A1- 2004 068 996
- US-A1- 2004 221 604

## Beschreibung

Es werden ein Kühlsystem und ein Verfahren zum Betreiben des Kühlsystems beschrieben. Das Kühlsystem weist mindestens zwei Kühleinrichtungen auf. Eine Kühleinrichtung weist ein Gehäuse auf, das einen Warenraum mindestens teilweise umgibt, wobei über eine Kühlmittelfördereinrichtung ein Kühlmittel einem Wärmetauscher zugeführt wird, der eine Kühlung der in den Warenraum aufgenommenen Waren bewirkt.

Kühleinrichtungen weisen in der Regel Seitenwände, eine Rückwand sowie ein Deckenelement und ein Bodenelement auf, wobei über die der Rückwand gegenüberliegende Seite der Warenraum der Kühleinrichtung zugänglich ist. Derartige Kühleinrichtungen werden beispielsweise als Kühlregale in Supermärkten verwendet. In dem Warenraum werden Lebensmittel gelagert, die gekühlt werden müssen. In der Regel werden in solchen Kühlregalen Lebensmittel gelagert, welche nicht tiefgefroren werden müssen. Es erfolgt hierzu eine Kühlung im Plusgradbereich. Zur Kühlung wird der Kühleinrichtung über eine Kühlmittelzuführleitung ein Kühlmittel zugeführt, über welches Wärme aus dem Warenraum entzogen und damit der Warenraum gekühlt wird.

Bei den Kühleinrichtungen ist es wichtig, dass stets eine Kühlung der in den Warenraum aufgenommenen Produkte durchgeführt wird. Bei einem Ausfall einer Kühlmittelfördereinrichtung erwärmen sich die aufgenommenen Produkte und verderben. Abgesehen von dem wirtschaftlichen Schaden, der für den betreibenden Supermarkt beim Ausfall einer Kühlmittelfördereinrichtung entsteht, kann auch eine Verschlechterung der Produkte eintreten, wenn die Kühlmittenfördereinrichtung zwar noch in Betrieb ist, aber nicht mehr die erforderliche Menge an Kühlmittel bereitstellen kann. In einem solchen Fall kann es zu einer Erwärmung der Produkte kommen, wodurch diese über einer zulässigen Höchsttemperatur gelagert werden. Es kann hierbei zu einer Verschlechterung der Waren kommen, wobei die Verschlechterung nicht oder erst spät erkannt werden kann. In diesem Fall sind bereits Waren entnommen worden, welche über einen bestimmten Zeitraum über ihrer zulässigen Höchsttemperatur gelagert wurden.

Aus dem Stand der Technik ist es bekannt, kritische Elemente bei Kühleinrichtungen redundant auszuführen. Eine solche Einrichtung wird beispielsweise in DE 10 2004 046 791 A1 beschrieben Weiterer relevanter Stand der Technik ist zu finden in DE 10 2005 061599 A1 und US 2004/221604 A1.

Das bloße Vorsehen einer zweiten Kühlmittelfördereinrichtung löst das Problem der Ausfallsicherheit, verursacht aber unverhältnismäßig hohe Kosten. Bei einer redundanten Ausführung würde eine zweite Kühlmittelfördereinrichtung nur dann eingesetzt werden, wenn eine erste Kühlmittelfördereinrichtung ausfällt. Demgemäß muss die redundante Kühlmittelfördereinrichtung mindestens die gleiche Kühlmittelförderleistung aufweisen, wie die abzusichernde Kühlmittelfördereinrichtung.

Die für eine Ausfallsicherung vorgesehene Steuerung ist einfach ausgebildet und aktiviert den Betrieb der zweiten Kühlmittelfördereinrichtung nur dann, wenn die erste Kühlmittelfördereinrichtung ausfällt.

Es ist daher Aufgabe, ein Kühlsystem und ein Verfahren zum Betreiben des Kühlsystems anzugeben, welche einen sicheren Betrieb des Kühlsystems bereitstellen, die Nachteile des Stands der Technik beheben und einen wirtschaftlichen Betrieb von Kühleinrichtungen mit einer Ausfallsicherung bereitstellen.

Die Aufgabe wird durch ein Kühlsystem mit den in Anspruch 1 angegebenen technischen Merkmalen und durch ein Verfahren zum Betreiben des Kühlsystems mit den in Anspruch 7 angegebenen technischen Merkmalen gelöst. Vorteilhafte Weiterbildungen sind in den Unteransprüchen im Detail angegeben.

Ein Kühlsystem, welches die vorstehend genannte Aufgabe löst, weist mindestens zwei Kühleinrichtungen mit mindestens jeweils einem Gehäuse, das einen Warenraum mindestens teilweise umgibt, einer Kühlmittelfördereinrichtung und mindestens einem Wärmetauscher auf, wobei die Kühlmittelfördereinrichtungen die Zufuhr eines Kühlmittels zu dem mindestens einen Wärmetauscher regeln, und wobei die Kühlmittelfördereinrichtungen über eine Regeleinheit miteinander gekoppelt sind.

Das Kühlsystem verbindet zwei Kühleinrichtungen, die bspw. als Kühlregale ausgebildet sein können, über die Regeleinheit. Auf eine redundante Ausführung der Kühlmittelfördereinrichtungen kann damit verzichtet werden, wobei die Ausfallsicherung über die Regeleinheit bereitgestellt wird.

Über die Regeleinheit kann Kühlmittel der jeweils anderen Kühleinrichtung zugeführt werden, wenn eine der Kühlmittelfördereinrichtung ausfällt oder deren Förderleistung unter eine Mindestfördermenge abfällt. Darüber hinaus kann über die Regeleinheit die Kühlmittelfördermenge erhöht werden, wenn die benötigte Kühlleistung die maximale Förderleistung der Kühlmittelfördereinrichtungen übersteigt oder neue Waren in mindestens einen der Warenräume der Kühleinrichtungen eingebracht werden. Ferner kann in Ausführungsvarianten der hierin beschriebenen technischen Lehre allein über die Regeleinheit die Kühlmittelzufuhr zu den Wärmetauschern der Kühleinrichtungen erfolgen, wenn die benötigte Kühlleistung einen Kühlbedarf-Schwellenwert unterschreitet und die Kühlmittelfördereinrichtungen nicht betrieben werden. Ein solcher Zustand betrifft bspw. einen Nachtbetrieb, wobei die Warenräume der Kühleinrichtungen verschlossen sind und kein Warenaustausch erfolgt. Daher findet nur ein geringer oder kein Wärmeübergang zwischen den Warenräumen und der Umgebung statt, so dass die Kühlleistung gegenüber einem Tagbetrieb deutlich reduziert ist.

In einem Beispiel, das kein Teil der Erfindung ist, ist die Regeleinheit ein Ventil, wobei jede der Kühlmittelfördereinrichtungen eine separate Kühlmittelzuführleitung aufweist und das Ventil in einer Verbindungsleitung angeordnet ist, welche in Kühlmittelströmungsrichtung den Kühlmittelfördereinrichtungen nachgeschaltete Leitungsabschnitte miteinander verbindet. Die Leitungsabschnitte sind weiter mit dem mindestens einen Wärmetauscher der jeweiligen Kühleinrichtung verbunden sind. Fällt eine der Kühlmittelfördereinrichtungen aus oder liegt die Förderleistung einer der Kühlmittelfördereinrichtungen unter einer Mindestfördermenge wird das Ventil geöffnet und Kühlmittel aus dem Kühlmittelkreislauf einer ersten Kühleinrichtung strömt zu dem Kühlmittelkreislauf einer zweiten Kühleinrichtung. Damit die Menge an Kühlmittel in beiden Kühlkreisläufen bzw. für beide Kühleinrichtungen in einem ausreichenden Maß zur Verfügung gestellt wird, kann zudem die Fördermenge an Kühlmittel für die Kühlmittelfördereinrichtung erhöht werden, welche die ausgefallene Kühlmittelfördereinrichtung ersetzt.

Erfindungsgemäß ist die Regeleinheit eine weitere Kühlmittelfördereinrichtung, wobei die Kühlmittelfördereinrichtungen parallel geschaltet und mit einer gemeinsamen Kühlmittelzuführleitung verbunden sind. Den Kühlmittelfördereinrichtungen in Kühlmittelströmungsrichtung nachgeschaltete Leitungsabschnitte sind miteinander verbunden, wobei der Leitungsabschnitt, welcher einer ersten Kühlmittelfördereinrichtung nachgeschaltet ist, mit dem mindestens einem Wärmetauscher einer ersten Kühleinrichtung verbunden ist und der Leitungsabschnitt, welcher einer zweiten Kühlmittelfördereinrichtung nachgeschaltet ist, mit dem mindestens einen Wärmetauscher einer zweiten Kühleinrichtung verbunden ist. Das Kühlsystem mit zwei Kühleinrichtungen, die beispielsweise als Kühlregale ausgebildet sind, weist damit drei Kühlmittelfördereinrichtungen auf, welche die Zufuhr für die Kühleinrichtungen bereitstellen. Jeder Kühleinrichtung ist eine Kühlmittelfördereinrichtung zugeordnet. Die dritte Kühlmittelfördereinrichtung ist in erster Linie dafür vorgesehen, beim Ausfall einer der anderen beiden Kühlmittelfördereinrichtungen für den Kühlmittelkreislauf mit der ausgefallenen Kühlmittelfördereinrichtung Kühlmittel zuzuführen. Zudem kann über die dritte Kühlmittelfördereinrichtung bei einem hohen Kühlbedarf zusätzliches Kühlmittel für beide Kühlmittelkreisläufe der beiden Kühleinrichtungen zugeführt werden. Darüber hinaus ist es bspw. in einem "Nachtbetrieb" möglich, nur über die dritte Kühlmittelfördereinrichtung Kühlmittel den Kühlmittelkreisläufen der beiden Kühleinrichtungen zuzuführen. Die beiden anderen Kühlmittelfördereinrichtungen werden in dieser Betriebsart nicht betrieben, wodurch auch die Energiekosten reduziert werden. Alternativ können aber gerade nachts oder stets dann, wenn die Energiekosten gering sind, alle drei Kühlmittelfördereinrichtungen betrieben werden, so dass die Warenräume schnell gekühlt werden können.

Das Vorsehen einer dritten Kühlmittelfördereinrichtung für zwei Kühleinrichtungen, wobei die dritte Kühlmittelfördereinrichtung mit den jeweiligen Kühlmittelfördereinrichtungen der Kühleinrichtungen gekoppelt und parallel geschaltet ist, stellt eine Ausfallsicherung bereit, wobei gegenüber dem Stand der Technik auf eine halbe Kühlmittelfördereinrichtung pro Kühleinrichtung verzichtet werden kann. Zudem ist es gegenüber einer Kühleinrichtung aus dem Stand der Technik mit zwei Kühlmittelfördereinrichtungen möglich, die Kühlung der beiden Kühleinrichtungen bedarfsabhängig durchzuführen und dabei die Fördermenge an Kühlmittel über die Steuerung der Fördermenge und den Zustand der Kühlmittelfördereinrichtungen zu steuern. Der Zustand umfasst einen aktiven Zustand und einen inaktiven Zustand, wobei im inaktiven Zustand keine Förderung erfolgt und keine Energie für den Betrieb der Kühlmittelfördereinrichtung benötigt wird.

Die Kühlmittelfördereinrichtungen können in weiteren Ausführungen eine voneinander unterschiedliche oder eine gleiche maximale Förderleistung aufweisen. Die Förderleitung einer ersten Kühlmittelfördereinrichtung und einer zweiten Kühlmittelfördereinrichtung können gegenüber einer Ausführung ohne dritte Kühlmittelfördereinrichtung eine geringere maximale Förderleistung aufweisen, da bei einem erhöhten Kühlbedarf für beide Kühlkreisläufe die zusätzliche Kühlmittelmenge über die dritte Kühlmittelfördereinrichtung bereitgestellt werden kann. Die erste und die zweite Kühlmittelfördereinrichtung können so dimensioniert werden, dass ihre maximale Förderleistung im Wesentlichen einen durchschnittlich benötigten Kühlbedarf deckt.

Die Kühlmittelfördereinrichtungen können Pumpen sein. Die Pumpen können drehzahlgesteuerte Pumpen sein. Dadurch lässt sich der Betrieb der Pumpen einfach regeln und an die gegebenen Zustände und Kühlvorgaben für den Betrieb der Kühleinrichtungen des Kühlsystems anpassen. Ein Vorteil bei der Ausführung mit einer dritten Kühlmittelfördereinrichtung bzw. dritten drehzahlgesteuerten Pumpe liegt darin, dass keine Ventile beim Ausfall einer der Pumpen geöffnet werden müssen. Regelungstechnisch sind damit eine einfache Kühlmittelzufuhr und eine einfache Ausfallsicherung bereitgestellt, da die Fördermenge nur über die Drehzahl geregelt werden kann.

In den, den Kühlmittelfördereinrichtungen nachgeschalteten Leitungsabschnitten können Durchflussregelelemente angeordnet sein, wobei die Durchflussregelelemente in weiteren Ausführungen Rückschlagklappen sein können. Das Durchflussregelelement bzw. die Rückschlagklappe sind so ausgebildet, dass ein Durchströmen von Kühlmittel in nur einer Richtung möglich ist. In noch weiteren Ausführungsformen kann jeder der Leitungsabschnitte ein Durchflussregelelement aufweisen, das in Kühlmittelströmungsrichtung den Pumpen nachgeschaltet ist.

Bei den Ausführungen mit einer dritten Kühlmittelfördereinrichtung bzw. drehzahlgesteuerten Pumpe kann in den, den Kühlmittelfördereinrichtungen nachgeschalteten Leitungsabschnitten zwischen einer ersten Kühlmittelfördereinrichtung und der dritten Kühlmittelfördereinrichtung sowie zwischen einer zweiten Kühlmittelfördereinrichtung und der dritten Kühlmittelfördereinrichtung jeweils ein Durchflussregelelement angeordnet sein. Die Durchflussregelelemente können dabei einen Kühlmittelstrom stets nur von der dritten Kühlmittelfördereinrichtung zu den anderen beiden Kühlmittelfördereinrichtungen zulassen.

Das Kühlsystem kann mindestens eine Steuereinheit aufweisen, die nach Maßgabe von Betriebszuständen der Kühleinrichtungen, des Beladungszustands der Kühleinrichtungen, von Umwelteinflüssen, und/oder der Förderleistung der Kühlmittelfördereinrichtungen, die Zufuhr von Kühlmittel über die Regeleinheit und die Kühlmittelfördereinrichtungen regelt.

Die Steuereinheit kann als zentrale Steuereinheit oder als dezentrale Steuereinheit vorgesehen sein. Ferner kann eine Steuereinheit auch Untereinheiten aufweisen, wobei eine als Kühlregal ausgebildete Kühleinrichtung eine zentrale Steuereinheit und für jeden Kühlbereich mit einem separaten Wärmetauscher oder Gruppe von Kühlbereichen eine separate Steuereinheit aufweist. So kann die Steuereinheit auch als zentrale Steuereinheit für das Kühlsystem ausgebildet sein, wobei die Kühleinrichtungen ebenfalls jeweils eine Steuereinheit aufweisen.

Der Betriebszustand der Kühleinrichtungen umfasst beispielsweise mindestens einen Tag-/Nachtbetrieb und einen Notlaufbetrieb beim Ausfall einer Kühlmittelfördereinrichtung bzw. Pumpe. Der Beladungszustand der Kühleinrichtungen hängt davon ab, ob Waren in den Warenräumen und in welcher Menge Waren aufgenommen sind. Beispielsweise kann auch beim Einbringen neuer Waren in die Kühleinrichtungen ein schnelles Kühlen durchgeführt werden, wobei in Ausführungen mit einer dritten Kühlmittelfördereinrichtung alle drei Kühlmittelfördereinrichtungen betrieben werden. Sind die Kühlmittelfördereinrichtungen als drehzahlgesteuerte Pumpen ausgebildet, kann deren Drehzahl entsprechend erhöht werden, um die zu erzielenden Temperaturen schnellstmöglich zu erreichen. Umwelteinflusse umfassen beispielsweise die Temperatur des Raumes, in welchem die Kühleinrichtungen aufgestellt sind, die Sonneneinstrahlung, Luftfeuchtigkeit und andere Parameter. Die Nennleistung der als Pumpen ausgebildeten Kühlmittelfördereinrichtungen kann beispielsweise als Information für eine der anderen Pumpen verwendet werden, um beim Ausfall einer Pumpe eine ausreichende Kühlmittelzufuhr bereitzustellen.

Über eine Ansteuerung von als Pumpen ausgebildeten Kühlmittelfördereinrichtungen kann der Betrieb der Kühleinrichtungen des Kühlsystems gesteuert werden, wobei über die drei Pumpen neben einer Ausfallsicherung auch der Betrieb der Kühleinrichtungen weiter verbessert wird. So ist es möglich, durch einen gleichzeitigen Betrieb von drei Pumpen die Fördermenge an Kühlmittel zu erhöhen. Dabei lässt sich die Fördermenge an Kühlmittel über die Steuerung der Drehzahl der Pumpen in einem weiten Bereich stufenlos einregeln. Insbesondere schnellauftretende Temperaturschwankungen, die in Rückführleitungen des Kühlmittels gemessen werden, können schnell durch eine Drehzahländerung der Pumpen kompensiert werden. Die Steuerung hierfür kann dadurch auch einfach ausgebildet sein, weil keine Ventilsteuerung erforderlich ist.

Bei den Ausführungen mit einer dritten Kühlmittelfördereinrichtung kann über die Drehzahl von als Pumpen ausgebildeten Kühlmittelfördereinrichtungen der Durchfluss des Kühlmittels geregelt werden, sodass auf weitere Stellorgane verzichtet werden kann. Insbesondere kann eine Ausfallsicherung auch dadurch vereinfacht werden, dass die Pumpen signaltechnisch so miteinander gekoppelt sind, dass bei einem Ausfall von einer Pumpe automatisch die dritte Pumpe die Funktion der ausgefallenen Pumpe übernimmt. Denkbar wäre in diese Zusammenhang eine Statusübermittlung der jeweiligen Pumpen untereinander, sodass für die dritte Pumpe, die als Ausfallsicherung dient, auch die Drehzahl der ausgefallenen Pumpe bekannt ist. Dies ermöglicht ein schnelles Ansprechen. Die Pumpen können hierzu untereinander über eine bidirektionale Kommunikation aktiviert werden.

In den Ausführungen mit drei Kühlmittelfördereinrichtungen, die bspw. drehzahlgesteuerte Pumpen sind, wird über die Pumpen die Versorgung der Wärmetauscher mit Kühlmittel sichergestellt, wobei sowohl eine Ausfallsicherung als auch ein schnelles Kühlen der Warenräume realisiert werden können. In einem Normalbetrieb wird jedem Wärmetauscher über seine zugeordnete Pumpe ein Kühlmittel zugeführt. Fällt eine der Pumpen, die den Kühlmittelkreisläufen der beiden Kühleinrichtungen zugeordnet sind, aus, so kann über die dritte Pumpe der Ausfall kompensiert werden. Dabei wird die jeweils andere regulär für den Betrieb vorgesehene Pumpe nicht übermäßig belastet, da der Ausfall beispielsweise der ersten Pumpe nicht durch die zweite Pumpe kompensiert wird, sondern durch die dritte Pumpe. Jedoch kann die dritte Pumpe auch so ausgelegt sein, dass sie beim Ausfall der ersten und der zweiten Pumpe eine ausreichende Kühlmittelförderung für den Betrieb der jeweiligen Kühlbereiche bereitstellt. Über die dritte Pumpe kann auch eine "Boost"-Funktion erreicht werden, in welcher ein sehr schnelles Kühlen der Warenräume der jeweiligen Kühleinrichtungen erfolgt. Die dritte Pumpe fördert dann zusätzliches Kühlmittel in die Leitungsabschnitte, die den Wärmetauschern zugeordnet sind.

Da über die dritte Pumpe gefördertes Kühlmittel auch bei Durchflussregelelementen in den Leitungsabschnitten automatisch in die jeweiligen Leitungsabschnitte strömt, wird beim Betrieb der dritten Pumpe in der Regel Kühlmittel sowohl dem ersten Wärmetauscher als auch dem zweiten Wärmetauscher zugeführt. Sollen die beiden Wärmetauscher aber unterschiedlich mit Kühlmittel versorgt werden, so wird die Drehzahl der jeweils zugeordneten Pumpen in den Kühlkreisläufen der beiden Kühleinrichtungen entsprechend reduziert. So kann beispielsweise beim Ausfall der ersten Pumpe auch die Drehzahl der zweiten Pumpe reduziert werden, da das über die dritte Pumpe geförderte Kühlmittel sowohl in den Leitungsabschnitt für den ersten Wärmetauscher als auch in den Leitungsabschnitt für den zweiten Wärmetauscher strömt. Über eine Steuer- und/oder Regeleinheit werden dabei der Betrieb der einzelnen Pumpen und insbesondere die Drehzahl der Pumpen zur Förderung der Kühlmittelmenge an die gewünschten Kühlleistungen angepasst. Dies erlaubt ein schnelles und sehr genaues Einstellen von Temperaturen innerhalb der Warenräume der jeweiligen Kühleinrichtungen und damit auch ein schnelles und genaues Einstellen der Kerntemperatur von in den Warenraum aufgenommenen Waren.

Bei den vorstehend beschriebenen Varianten können die drei Pumpen eine voneinander unterschiedliche oder die gleiche Nennleistung aufweisen. Beispielsweise kann die Nennleistung der ersten und zweiten Pumpe geringer sein als die Nennleistung der dritten Pumpe, wobei beispielsweise an einem Tagbetrieb nur die erste und die zweite Pumpe betrieben werden und in einem Nachtbetrieb die Versorgung der beiden Kühlbereiche nur über die dritte Pumpe erfolgt.

Wie eingangs bereits angegeben, erlaubt die Ausbildung der Pumpen als drehzahlgesteuerte Pumpen eine einfache und sichere Steuerung der Kühlmittelzufuhrmenge. Ein weiterer Vorteil der hierin beschriebenen Ausführungen mit drei Kühlmittelfördereinrichtungen bzw. drehzahlgesteuerten Pumpen liegt darin, dass bei der Erhöhung der Kühlmittelfördermenge die den Kühleinrichtungen zugeordneten Pumpen nicht mit ihrer maximalen Drehzahl betrieben werden müssen, sondern die Erhöhung der Kühlmittelfördermenge durch Zuschalten der dritten Pumpe erreicht werden kann. Vorteilhafterweise ist die Steuerung so ausgelegt, dass beim Anstieg einer geforderten Kühlmittelmenge die dritte Pumpe bereits Kühlmittel fördert, bevor die anderen beiden Pumpen mit ihrer maximalen Drehzahl betrieben werden. Hierüber lässt sich ein kontinuierlicher und genau steuerbarer Kühlmittelstrom erreichen. Es treten dabei keine Sprünge im Verlauf der geförderten Kühlmittelmenge auf.

Das Kühlsystem und die dazugehörigen hierin beschriebenen Kühleinrichtungen weisen ferner Messeinheiten auf, welche die Temperatur des Kühlmittels im Vorlauf und im Rücklauf, die Fördermenge an Kühlmittel sowie die Temperatur im Warenraum und an anderen Stellen wie beispielsweise der Umgebung der Kühleinrichtungen erfassen. Diese Informationen können als Information der mindestens einen Steuereinheit zugeführt werden, welche daraus den Beladungszustand und den Kühlbedarf für die jeweiligen Warenräume ermittelt und in Folge dessen die Drehzahl der als drehzahlgesteuerten Pumpen ausgebildeten Kühlmittelfördereinrichtungen regelt.

Das Gehäuse der Kühleinrichtungen des Kühlsystems ist in weiteren Ausführungsformen so ausgebildet, dass die Gehäuse über eine offene Vorderseite zugänglich sind. Die offenen Vorderseiten können jeweils über eine Verschließeinrichtung der Kühleinrichtungen verschlossen werden, welche beispielsweise ein Rollo aufweisen. Bei einem Kühlregal in einem Supermarkt wird das Rollo nachts heruntergefahren, sodass ein geringerer oder im Wesentlichen kein Wärmeübergang zwischen dem Warenraum der Kühleinrichtung und der Umgebung der Kühleinrichtung, beispielsweise eines Verkaufsraums, stattfindet. Da bei einem geschlossenen Rollo ein geringerer Wärmeübergang erfolgt, ist auch eine geringere Fördermenge an Kühlmittel erforderlich, was ebenfalls bei der Steuerung berücksichtigt wird. Dementsprechend kann in einem solchen Nachtbetrieb die Kühlmittelförderung bspw. nur über die dritte Pumpe bereitgestellt werden.

Die Kühleinrichtungen können in weiteren Ausführungsformen, wie bereits angegeben, eine zentrale Regel-/Steuereinheit aufweisen, welche den Betrieb der einzelnen Komponenten steuert und mit den einzelnen Komponenten kommuniziert. Die Regel-/Steuereinheit kann auch die Kommunikation der einzelnen Komponenten untereinander steuern. Es können neben Temperaturerfassungsvorrichtungen weitere Messeinrichtungen vorgesehen sein, wie beispielsweise Einrichtungen zur Messung der Durchflussgeschwindigkeit und des Massestroms des Kühlmittels.

Die Wärmetauscher der Kühleinrichtungen der hierin beschriebenen Varianten können beispielsweise Plattenwärmetauscher sein. Als Kühlmittel kommt insbesondere eine Sole zum Einsatz, wobei die Sole eine Wasser-Glykolmischung sein kann.

Die Kühleinrichtungen können ferner Ventilatoren aufweisen, welche Luft über die Wärmetauscher führen, wodurch die Luft gekühlt wird. Die gekühlte Luft kann über entsprechende Kanäle in einer Rückwandanordnung, dem Deckenelement und dem Bodenelement sowie den Seitenwänden geführt werden und über einen vorderen Luftaustrittsbereich des Deckenelementes austreten und über einen vorderen Lufteintrittsbereich des Bodenelements angesaugt werden. Auch die Rückwandanordnung kann eine Vielzahl von Lüftungsschlitzen aufweisen, über welche gekühlte Luft ausströmt.

Die vorstehend genannte Aufgabe wird auch durch ein Verfahren zum Betreiben eines Kühlsystems nach einer der vorstehend genannten Varianten gelöst, wobei über die Regeleinheit
- Kühlmittel der jeweils anderen Kühleinrichtung zugeführt wird, wenn mindestens eine der Kühlmittelfördereinrichtung ausfällt oder deren Förderleistung unter eine Mindestfördermenge abfällt,
- die Kühlmittelfördermenge erhöht wird, wenn die benötigte Kühlleistung die maximale Förderleistung der Kühlmittelfördereinrichtungen übersteigt oder neue Waren in mindestens einen der Warenräume der Kühleinrichtungen eingebracht werden, und/oder
- die Kühlmittelzufuhr zu den Wärmetauschern der Kühleinrichtungen erfolgt, wenn die benötigte Kühlleistung einen Kühlbedarf-Schwellenwert unterschreitet und die Kühlmittelfördereinrichtungen nicht betrieben werden.

In der vorstehenden Beschreibung sind verschiedene Betriebsmodi für Kühlsysteme angegeben. Entsprechend diesen Ausführungen sind daher auch die Verfahrensschritte zum Steuern der Kühlsysteme zu verstehen und ausgebildet. So wird ein schnelles Kühlen der Warenräume bzw. der in den Warenräumen aufgenommenen Waren dadurch erreicht, dass bspw. drei als drehzahlgesteuerte Pumpen ausgebildete Kühlmittelfördereinrichtungen gleichzeitig betrieben werden. Dies kann dann erfolgen, wenn neue Waren eingebracht werden.

Alternativ können auch bei einem Kühlsystem mit zwei Kühleinrichtungen, die jeweils eine als drehzahlgesteuerte Pumpe ausgebildete Kühlmittelfördereinrichtung aufweisen und die Pumpen über ein Ventil miteinander gekoppelt sind, die Pumpen als Ausfallsicherung dienen, wobei beispielsweise jede der Pumpen so ausgebildet ist, dass sie beim Ausfall der anderen Pumpe eine entsprechende Mindestfördermenge an Kühlmittel bereitstellen kann.

Das Verfahren zur Steuerung umfasst auch Verfahrensschritte, wonach die Vorlauf- und die Rücklauftemperatur des Kühlmittels in jedem Kühlbereich erfasst werden, der daraus resultierende Kühlbedarf ermittelt wird, und entsprechend die mindestens zwei Pumpen in ihrer Drehzahl so angesteuert werden, dass ein schnelles Kühlen erfolgt und/oder ein unterschiedliches Kühlen verschiedener Kühlbereiche, und/oder ein situationsangepasstes Kühlen ohne Sprünge in der Förderleistung des Kühlmittels durchgeführt wird.

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

In den Zeichnungen zeigt:
Fig. 1 eine schematische Ansicht einer Kühleinrichtung mit einer redundanten Fördereinrichtung;
Fig. 2 eine schematische Ansicht einem ersten Beispiel einer Kühleinrichtung, das kein Teil der Erfindung ist; und
Fig. 3 eine schematische Ansicht einer zweiten Ausführungsform einer Kühleinrichtung.

In den Zeichnungen mit gleichen Bezugszeichen versehene Teile entsprechen im Wesentlichen einander, sofern nichts anderes angegeben ist. Ferner wird darauf verzichtet, Bestandteile zu beschreiben, welche nicht wesentlich zum Verständnis der hierin offenbarten technischen Lehre sind.

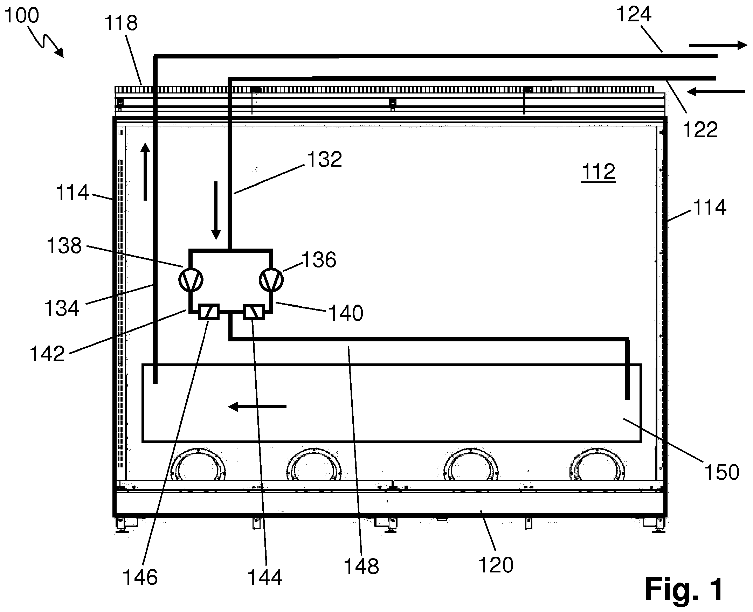

Fig. 1 zeigt eine Kühleinrichtung 100 aus dem Stand der Technik mit einer Ausfallsicherung. Die Kühleinrichtung 100 weist ein Gehäuse mit Seitenwänden 114, einem Bodenelement 120 und einem Deckenelement 118 auf. An der Rückseite ist die Kühleinrichtung 100 über eine Rückwandanordnung geschlossen. Über die vordere Seite ist die Kühleinrichtung 100 zumindest temporär offen ausgebildet, sodass der Warenraum 112 zum Entnehmen von Waren wie Milchprodukte, Geflügel- und Fleischwaren sowie Obst und Gemüse zugänglich ist. Die Kühleinrichtung 100 weist eine Kühlmittelzuführleitung 122 und eine Kühlmittelabführleitung 124 auf. Die Kühlmittelzuführleitung 122 und die Kühlmittelabführleitung 124 sind mit einer außerhalb der Kühleinrichtung 100 angeordneten und zentralen Einrichtung gekoppelt, die das über die Kühlmittelzuführleitung 122 zugeführte Kühlmittel auf eine einstellbare Vorlauftemperatur bringt. Über die Kühlmittelabführleitung 124 wird das Kühlmittel der Einrichtung wieder zugeführt. Als Kühlmittel wird eine Sole verwendet. Die Einrichtung kann beispielswiese eine Wärmepumpe sein und mit weiteren hydraulischen Elementen gekoppelt und ausgebildet sein.

Die Zuführleitung 132 der Kühleinrichtung 100 teilt sich in zwei parallele Leitungsabschnitte auf. In einem ersten Leitungsabschnitt 140 ist eine erste Pumpe 136 und in einem zweiten Leitungsabschnitt 142 ist eine zweite Pumpe 138 angeordnet. Die Pumpe 136 ist im Leitungsabschnitt 140 und die Pumpe 138 ist im Leitungsabschnitt 142 angeordnet. Der Pumpe 136 ist in Strömungsrichtung des Kühlmittels eine Rückschlagklappe 144 als Durchflussregelelement nachgeschaltet. Der Pumpe 138 ist in Strömungsrichtung des Kühlmittels eine Rückschlagklappe 146 nachgeschaltet. Die Leitungsabschnitte 140 und 142 münden in einen gemeinsamen Leitungsabschnitt 148.

Der gemeinsame Leitungsabschnitt 148 ist mit einem Wärmetauscher 150 verbunden. Der Wärmetauscher 150 ist ein plattenförmiger Wärmetauscher 150. Von dem Wärmerauscher 150 führt eine Abführleitung 134 zu der zentralen Kühlmittelabführleitung 124. Im Kühlbereich 130 kann auch noch mindestens ein Ventilator vorgesehen sein, der Luft über den Wärmetauscher 150 führt, wobei die Luft gekühlt wird. Die gekühlte Luft wird dann innerhalb der Warenraums 112 umgewälzt, um in dem Warenraum 112 aufgenommene Waren zu kühlen.

Die Pfeile zeigen die Strömungsrichtung des Kühlmittels im Betrieb der Kühleinrichtung 100. Über die Pumpe 136 wird in einem normalen Betrieb das Kühlmittel gefördert. Fällt die Pumpe 136 aus, wird die Pumpe 138 aktiviert, welche dann das Kühlmittel dem Wärmetauscher 150 zuführt. Die Pumpe 138 dient als Ausfallsicherung und wird nur betrieben, wenn die Pumpe 136 ausfällt. Dazu ist die Pumpe 138 analog zu der Pumpe 136 ausgebildet und weist zum Beispiel die gleiche Nennleistung auf.

Nachteilig bei der Kühleinrichtung 100 ist, dass die zweite Pumpe 138 im Normalfall nicht benötigt wird. Störungen und Ausfälle können im Betrieb der Kühleinrichtung 100 selten oder nicht auftreten, so dass der Kostenaufwand für die zweite Pumpe 138 nicht gerechtfertigt ist. Jedoch ist eine Ausfallsicherung notwendig, damit die in dem Warenraum 112 aufgenommenen Waren stets ausreichend gekühlt werden.

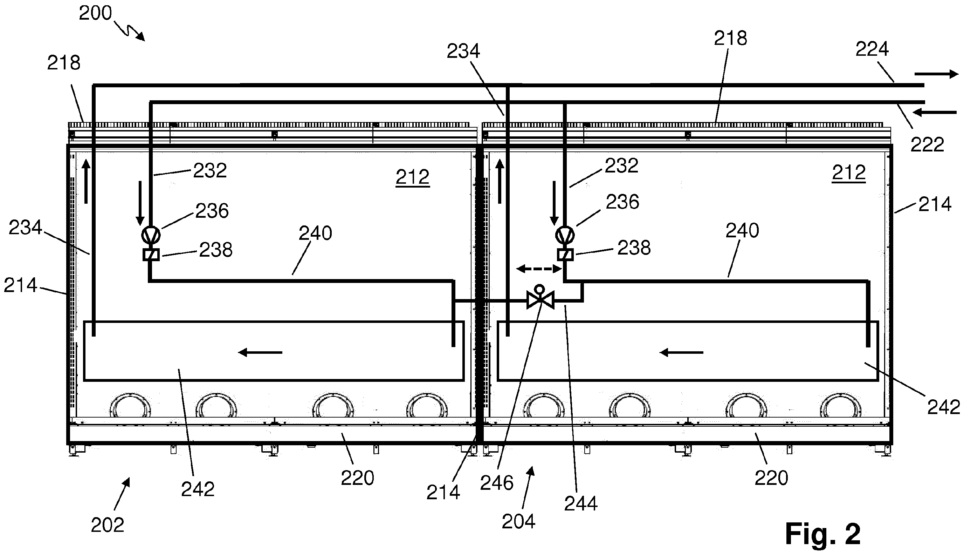

Um eine Ausfallsicherung ohne erhöhte Kosten und einen verbesserten Betrieb von Kühleinrichtungen zu ermöglichen, weist das Kühlsystem 200 von Fig. 2 mindestens zwei Kühleinrichtungen 202 und 204 sowie eine Regeleinheit auf. In dem Kühlsystem 200 sind zwei Kühleinrichtungen 202 und 204 über die Regeleinheit miteinander gekoppelt, wobei in einem Beispiel das kein Teil der Erfindung ist, die Regeleinheit ein Ventil 246 ist. Die Kühleinrichtungen 202 und 204 sind über eine Verbindungsleitung 244 und das Ventil 246 miteinander gekoppelt, so dass beim Ausfall einer Pumpe 236 einer der beiden Kühleinrichtungen 202 und 204 die jeweils andere Pumpe 236 Kühlmittel zu dem jeweiligen Wärmetauscher 242 fördert.

Die Kühleinrichtungen 202 und 204 entsprechen im Wesentlichen der Kühleinrichtung 100, wobei einzelne Komponenten der Kühleinrichtungen 100, 202 und 204 mit den gleichen Bezugszeichen versehen sind und sich nur durch die vorgestellten Zahlen unterscheiden. Demgemäß entspricht eine Zuführleitung 132 im Wesentlichen einer Zuführleitung 232 und eine Abführleitung 134 einer Abführleitung 234 etc.

Bei dem in Fig. 2 gezeigten Kühlsystem 200 sind die Leitungsabschnitte 240 über eine Verbindungsleitung 244 miteinander verbunden. In der Verbindungsleitung 244 ist das Ventil 246 angeordnet, welches eine Zufuhr von Kühlmittel sowohl vom Leitungsabschnitt 240 der Kühleinrichtung 202 zum Leitungsabschnitt 240 der Kühleinrichtung 204 als auch vom Leitungsabschnitt 240 der Kühleinrichtung 204 zum Leitungsabschnitt 240 der Kühleinrichtung 202 ermöglicht. Die Verbindung der beiden Kühleinrichtungen 202 und 204 stellt sicher, dass beim Ausfall einer Pumpe 236 ein ausreichendes Kühlen der Warenräume 212 der jeweiligen Kühleinrichtungen 202 und 204 durchgeführt werden kann.

Die Pumpen 236 können zur Bereitstellung einer Ausfallsicherung eine größere Nennleistung aufweisen, als eine vergleichbare Pumpe 136 bei der Kühleinrichtung 100. Der Grund hierfür ist, dass eine der Pumpen 236 beim Ausfall der anderen Pumpe 236 sowohl Kühlmittel zu dem Wärmetauscher 242 der Kühleinrichtung 202 als auch zu dem Wärmetauscher 242 der Kühleinrichtung 204 fördern muss. Eine Erhöhung der Nennleistung der Pumpen 236 ist aber im Hinblick auf die Kosten günstiger als das Vorsehen jeweils einer zweiten Pumpe für die Kühleinrichtungen 202 und 204. Zudem kann die Auswahl der Pumpen 236 so getroffen werden, dass bspw. beim Ausfall einer der Pumpen 236 lediglich eine Notkühlung der jeweils anderen Kühleinrichtung 202 oder 204 durchgeführt wird. Darüber hinaus kann zusätzlich das Ventil 246 nur so weit geöffnet werden, dass eine Notkühlung möglich ist.

Das Kühlsystem 200 weist eine in Fig. 2 nicht dargestellte Steuereinheit auf, die den Betrieb der als drehzahlgesteuerten Pumpen 236 ausgebildeten Pumpen 236 und das Öffnen und Schließen des Ventils 246 steuert. Den Pumpen 236 ist in Kühlmittelströmungsrichtung jeweils eine Rückschlagklappe 238 nachgeschaltet, die ein Zurückströmen von Kühlmittel verhindert. Jedoch kann alleine über die Pumpen 236 die Menge an Kühlmittel geregelt werden, das in die Leitungsabschnitte 240 strömt. Daher kann in weiteren Ausführungen auf Rückschlagklappen 238 verzichtet werden. Die Steuereinheit ist zudem mit weiteren Einrichtungen verbunden, wie bspw. Temperaturerfassungsvorrichtungen zum Erfassen der Kühlmitteltemperatur im Vorlauf und im Rücklauf der Kühleinrichtungen 202 und 204 sowie in der Kühlmittelzuführleitung 222 und in der Kühlmittelabführleitung 224. Alternativ oder zusätzlich können auch die Kühleinrichtungen 202 und 204 jeweils eine Steuereinheit aufweisen. Diese Steuereinheiten können ebenfalls den Betrieb der den jeweiligen Kühlvorrichtungen 202 und 204 zugeordneten Komponenten regeln und Informationen, wie die Kühlmitteltemperatur und Kühlmittelmenge in den entsprechenden Leitungen, über dafür vorgesehene Vorrichtungen erhalten und diese Informationen an die zentrale Steuereinheit weiterleiten.

Darüber hinaus können die Kühleinrichtungen 202 und 204 weitere Einrichtungen, wie z.B. Ventilatoren aufweisen, welche Luft über die Wärmetauscher 242 führen und die gekühlte Luft in den Warenräumen 212 umwälzen.

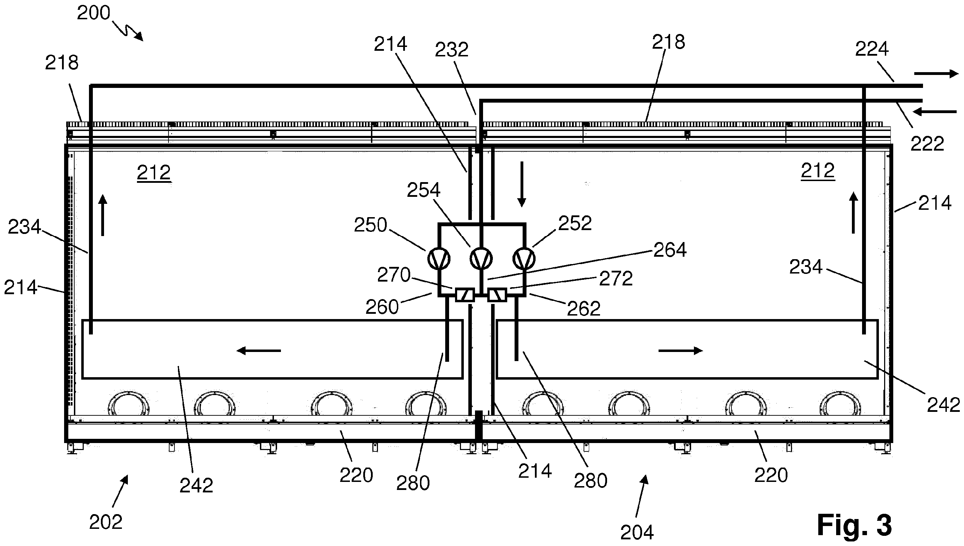

Fig. 3 zeigt eine schematische Ansicht eines weiteren Kühlsystems 200 mit zwei Kühleinrichtungen 202 und 204 sowie einer Regeleinheit einer zweiten Ausführungsform. Die Regeleinheit, welche die Kühleinrichtungen 202 und 204 miteinander koppelt, ist in dieser Ausführung eine drehzahlgesteuerte Pumpe 254.

Das Kühlsystem 200 weist wie das in Fig. 2 gezeigte Kühlsystem 200 zwei Kühleinrichtung 202 und 204 auf. Die Kühleinrichtungen können ebenso wie für die in Fig. 2 gezeigte zweite Ausführungsform bspw. Kühlregale sein. Solche Kühlregale werden z.B. in Supermärkten aufgestellt und als Ausstellungsmöbel für zu kühlende Waren verwendet. Hierbei wird auf die Ausführungen zu Fig. 1 verwiesen.

Die Kühleinrichtungen 202 und 204 weisen jeweils ein Gehäuse mit Seitenwänden 214, einem Bodenelement 220 und einem Deckenelement 218 sowie einer Rückwandanordnung auf. Die Kühleinrichtungen 202 und 204 sind als separate Kühleinheiten ausgebildet und weisen eine gemeinsame Kühlmittelzuführanordnung auf. Das Kühlsystem 200 weist für die Kühleinrichtungen 202 und 204 eine gemeinsame Zuführleitung 232 auf. Der Zuführleitung 232 wird ein Kühlmittel von einer zentralen Kühlmittelzuführleitung 322 zugeführt. Über separate Abführleitungen 234 wird erwärmtes Kühlmittel von den Wärmetauschern 242 einer zentralen Kühlmittelabführleitung 224 zugeführt. Die Kühlmittelzuführleitung 222 und die Kühlmittelabführleitung 224 sind mit einer Einrichtung zum Kühlen des darüber geförderten Kühlmittels verbunden. Beispielsweise ist die Einrichtung zum Kühlen eine Wärmepumpe.

Von der gemeinsamen Zuführleitung 232 wird Kühlmittel einer Anordnung mit drei parallel angeordneten Pumpen 250, 252 und 254 zugeführt. Die Pumpen 250, 252 und 254 sind drehzahlgesteuerte Pumpen 250, 252 und 254. Eine erste Pumpe 252 ist der Kühleinrichtung 202 zugeordnet und fördert in einem normalen Betrieb Kühlmittel zu dem Wärmetauscher 242 über die Leitungsabschnitte 260 und 280. Eine zweite Pumpe 252 ist der Kühleinrichtung 204 zugeordnet und fördert in einem normalen Betrieb Kühlmittel zu dem Wärmetauscher 242 über die Leitungsabschnitte 262 und 280.

Um eine Ausfallsicherung bereitzustellen und eine bedarfsabhängige Kühlung des Kühlsystems 200 zu erreichen ist die dritte Pumpe 254 über einen Leitungsabschnitt 264 mit den Leitungsabschnitten 260 und 262 über Rückschlagklappen 270 und 272 verbunden. Die Rückschlagklappen 270 und 272 sind so ausgebildet und angeordnet, dass Kühlmittel stets nur von der dritten Pumpe 254 über den Leitungsabschnitt 264 in den Leitungsabschnitt 260 und in den Leitungsabschnitt 262 strömen kann. Ein Zurückströmen über die Rückschlagklappen 270 und 272 ist nicht möglich.

In weiteren nicht dargestellten Ausführungen sind keine Rückschlagklappen 270 und 272 vorgesehen, so dass bspw. auch über die erste Pumpe 250 gefördertes Kühlmittel in den Leitungsabschnitt 262 strömen kann.

Die Pumpen 250, 252 und 254 können die gleiche Nennleistung aufweisen. In einem normalen Betrieb wird beispielsweise ein Kühlmittel über die Zuführleitung 232 den Pumpen 250 und 252 zugeführt, wobei die Pumpen 250 und 252 in Abhängigkeit ihrer Drehzahl eine bestimmte Fördermenge an Kühlmittel für die Wärmetauscher 242 bereitstellen. In Abhängigkeit des geförderten Kühlmittels kühlen die Wärmetauscher 242 die Warenräume 212 und die darin gelagerten Waren. In Abhängigkeit der Drehzahl der Pumpen 250 und 252 können die Warenräume 212 der Kühleinrichtungen 202 und 204 auch unterschiedlich stark gekühlt werden. In einer solchen Betriebsart kann die dritte Pumpe 254 inaktiv sein und kein Kühlmittel fördern.

Die Kühleinrichtungen 202 und 204 weisen zudem Temperaturerfassungseinrichtungen für die Temperatur des Kühlmittels im Vorlauf und im Rücklauf sowie in den Warenräumen 212 auf. Darüber hinaus können die Kühleinrichtung 202 und 204 Ventilatoren aufweisen, welche Luft über die Wärmetauscher 242 kühlen und in den Warenräumen 212 umwälzen.

Fällt nun eine der Pumpen 250 und 252 aus, so wird die dritte Pumpe 254 aktiviert und Kühlmittel über die Verbindungsleitungen 260 oder 262 in den Leitungsabschnitt 280 der anderen Kühleinrichtung 202 oder 204 zugeführt. Die Rückschlagklappen 270 und 272 sind so ausgebildet, dass sie einen Durchfluss von Kühlmittel erst dann zulassen, wenn ein bestimmter Druck an den Rückschlagklappen 270 und 272 vorherrscht.

In einem normalen Betrieb wird die Zufuhr von Kühlmittel zu den Wärmetauschern 242 über die Drehzahl der Pumpen 250 und 252 gesteuert. Fällt eine der Pumpen 250 und 252 aus, so wird über die Pumpe 254 in entsprechendem Maß durch eine Anpassung der Drehzahl der Pumpe 254 das benötigte Kühlmittel dem Wärmetauscher 242 der Kühleinrichtung 202 oder dem Wärmetauscher der Kühleinrichtung 204 zugeführt. Fallen beide Pumpen 250 und 252 aus, kann allein über die Pumpe 254 Kühlmittel zu den Wärmetauschern 242 geführt werden. Zudem ist es möglich, wenn neue Waren in die Warenräume 212 eingebracht werden, zusätzlich zu den Pumpen 250 und 252 die dritte Pumpe 254 zu aktivieren, wobei eine deutlich größere Menge an Kühlmittel den Wärmetauschern 242 zugeführt wird und damit ein schnelles Kühlen der Warenräume 212 erfolgt. Beispielsweise können alle Pumpen 250, 252 und 254 mit ihrer maximalen Drehzahl betrieben werden. Es ist aber auch möglich, durch Aktivieren der Pumpe 254 und durch entsprechendes Ansteuern der Drehzahl der Pumpen 250, 252 und 254, nur einem der Wärmetauscher 242 zusätzliches Kühlmittel zuzuführen. Insbesondere bei Ausführungsformen ohne Rückschlagklappen 270 und 272 erfolgt die Ansteuerung der Pumpen 250, 252 und 254 derart, dass die Gesamtkühlmittelmenge bzw. der Kühlmittelmassestrom in den Leitungsabschnitten 280 so groß ist, dass die gewünschte Kühlung über die Wärmetauscher 242 erfolgt.

Erfolgt beispielsweise eine Beladung des Warenraums 212 der Kühleinrichtung 202 mit neuen zu kühlenden Waren, so kann neben der Erhöhung der Drehzahl der Pumpe 250 auch die Drehzahl der Pumpe 254 erhöht werden, um ein schnelles Kühlen zu erreichen. Das Einbringen von neuen Waren in die Warenräume 212 kann entweder einer Regeleinheit mitgeteilt werden oder wird über eine Temperaturmessung in den Warenräumen 212 oder in den Rückläufen, insbesondere in den Abführleitungen 134, gemessen. Sowohl in Ausführungen mit Rückschlagklappen 270, 272 und in Ausführungen ohne solche kann zusätzliches Kühlmittel auch in den Leitungsabschnitt 280 der Kühleinrichtung 204 strömen, so dass dem Wärmetauscher 242 der Kühleinrichtung 204 mehr Kühlmittel zugeführt wird, als benötigt. Um ein "Überkühlen" zu verhindern, weil beispielsweise keine neuen Waren in den Warenraum 212 der Kühleinrichtung 204 eingebracht werden und ein geringer Kühlbedarf vorliegt, wird die Drehzahl der Pumpe 252 reduziert, damit der Gesamt-Massestrom an Kühlmittel in dem Leitungsabschnitt 280 der Kühleinrichtung 204 nicht erhöht wird.

Insbesondere wenn die Warenräume 212 vollständig neu mit Waren beladen werden, ist ein schnelles Kühlen erforderlich, da die Kerntemperatur der Waren eine bestimmte Temperatur nicht überschreiten darf. Bei herkömmlichen Kühleinrichtungen ergeben sich beispielsweise zum Erreichen einer Kerntemperatur von 7 Grad für Molkereiprodukte ausgehend von einem völlig ungekühlten Kühlregal mit im Wesentlichen Raumtemperatur im Warenraum 112 Abkühlzeiten von bis zu vier Stunden. In der Regel muss daher das Kühlregal vier Stunden vor dem erstmaligen Beladen in Betrieb genommen und der Warenraum 112 mit einer maximalen Kühlmittelfördermenge gekühlt werden. Bei dem in Fig. 3 gezeigten Kühlsystem 200 ist dies beispielsweise in weniger als 2 Stunden möglich, da über die Pumpen 250, 252 und 254 eine deutlich größere Menge an Kühlmittel zugeführt werden kann. Über die dritte Pumpe 254 wird ein schnelles Kühlen der Waren in den Warenräumen 212 erreicht, ohne dass die Vorlauftemperatur in der Kühlmittelzuführleitung 222 erhöht werden muss. Durch eine größere Fördermenge an Kühlmittel steigt auch die Temperatur im Rücklauf weniger stark an als bei Kühleinrichtungen 100 aus dem Stand der Technik. Daher kann die zentral vorgesehene Einrichtung, die zum Kühlen des Kühlmittels vorgesehen ist, im Wesentlichen konstant betrieben werden. Geringe Schwankungen in der erforderlichen Kühlleistung der Einrichtung zum Kühlen des Kühlmittels können nicht ausgeschlossen werden, jedoch ist der Bereich, in welchen sich die Rücklauftemperatur des Kühlmittels während des Betriebs der Kühleinrichtungen 202 und 204 befindet, deutlich geringer als bei Kühlregalen aus dem Stand der Technik. Daher kann auch die Einrichtung zum Kühlen des Kühlmittels für die Kühleinrichtungen 202 und 204 wirtschaftlicher betrieben werden.

Darüber hinaus ist es möglich, beispielsweise in einem Nachtbetrieb mit einer geschlossenen Vorderseite der Kühleinrichtungen 202 und 204, die Kühlung über beide Wärmetauscher 242 nur durch eine Kühlmittelzufuhr über die Pumpe 254 zu steuern. In einem Nachbetrieb werden die Kühleinrichtungen 202 und 204 über eine Verschließeinrichtung mit einem Rollo verschlossen. Die Pumpen 250 und 252 können bspw. in dem Nachbetrieb oder einer Betriebsart mit einem geringen Kühlbedarf deaktiviert werden, wobei die Gesamt-Leistungsaufnahme für das Kühlsystem 200 reduziert ist. Eine "Boost"-Funktion mit einem schnellen Kühlen der Warenräume 212 kann bspw. auch dann durchgeführt werden, wenn die Energiekosten für den Betrieb der Pumpen 250, 252 und 254 gering sind. Steigen die Energiekosten, kann die Kühlung der Warenräume 212 durch eine Kühlmittelzufuhr allein über die Pumpe 254 oder über die Pumpen 250 und 252 erreicht werden.

Die Steuerung der Kühlung in dem Kühlsystem 200 mit den Kühleinrichtungen 202 und 204 erfolgt über eine zentrale Steuer- und Regeleinrichtung, die in Fig. 3 nicht dargestellt ist. Auch sind Messeinrichtungen für die Temperatur und die Durchflussmenge des Kühlmittels im Vorlauf und Rücklauf sowie in den Warenräumen 212 nicht dargestellt. Die zentrale Steuer- und Regeleinrichtung steuert in Abhängigkeit der erfassten Werte sowie in Abhängigkeit der Drehzahl der Pumpen 250, 252, und 254 die Kühlung der jeweiligen Warenräume 212. Hierzu sind nicht dargestellte Signal- und Steuerleitungen vorgesehen. Die Steuer- und Regeleinrichtung gibt die Drehzahl der Pumpen 250, 252 und 254 vor, sodass in Abhängigkeit der erfassten Temperaturen und der tatsächlich vorliegenden Drehzahl die Drehzahl der Pumpen 250, 252 und 254 geregelt und damit ein schnelles Kühlen bereitgestellt wird. Zudem wird eine Ausfallsicherung bereitgestellt, wobei über die Pumpe 254 auch eine ausreichende Kühlung durch Kühlmittelzufuhr zu den Wärmetauschern 242 dann erreicht werden kann, wenn sowohl die Pumpe 250 als auch die Pumpe 252 ausfallen. Dementsprechend sind die Leistungen der Pumpen 250, 252 und 254 zu wählen.

### Bezugszeichenliste

- 100: Kühleinrichtung
- 112: Warenraum
- 114: Seitenwand
- 118: Deckenelement
- 120: Bodenelement
- 122: Kühlmittelzuführleitung
- 124: Kühlmittelabführleitung
- 132: Zuführleitung
- 134: Abführleitung
- 136: Pumpe
- 138: Pumpe
- 140: Leitungsabschnitt
- 142: Leitungsabschnitt
- 144: Rückschlagklappe
- 146: Rückschlagklappe
- 148: Leitungsabschnitt
- 150: Wärmetauscher
- 200: Kühlsystem
- 202: Kühleinrichtung
- 204: Kühleinrichtung
- 212: Warenraum
- 214: Seitenwand
- 218: Deckenelement
- 220: Bodenelement
- 222: Kühlmittelzuführleitung
- 224: Kühlmittelabführleitung
- 232: Zuführleitung
- 234: Abführleitung
- 236: Pumpe
- 238: Rückschlagklappe
- 240: Leitungsabschnitt
- 242: Wärmetauscher
- 244: Verbindungsleitung
- 246: Ventil
- 250: Pumpe
- 252: Pumpe
- 254: Pumpe
- 260: Leitungsabschnitt
- 262: Leitungsabschnitt
- 264: Leitungsabschnitt
- 270: Rückschlagklappe
- 272: Rückschlagklappe
- 280: Leitungsabschnitt

## Patentansprüche

1. Kühlsystem, mindestens aufweisend zwei separate Kühleinrichtungen (202, 204) mit mindestens jeweils einem Gehäuse, das einen Warenraum (212) mindestens teilweise umgibt, einer Kühlmittelfördereinrichtung und mindestens einem Wärmetauscher (242), wobei die Kühlmittelfördereinrichtungen der separaten Kühleinrichtungen (202, 204) die Zufuhr eines Kühlmittels zu dem mindestens einen Wärmetauscher (242) regeln, wobei
- die Kühlmittelfördereinrichtungen über eine Regeleinheit miteinander gekoppelt sind,
- die Regeleinheit eine Kühlmittelfördereinrichtung ist,
- die Kühlmittelfördereinrichtungen parallel geschaltet und mit einer gemeinsamen Kühlmittelzuführleitung verbunden sind,
- den Kühlmittelfördereinrichtungen in Kühlmittelströmungsrichtung nachgeschaltete Leitungsabschnitte (260, 262, 264) vor den jeweiligen Wärmetauschern (242) miteinander verbunden sind,
- der Leitungsabschnitt (260), welcher einer ersten Kühlmittelfördereinrichtung nachgeschaltet ist, mit dem mindestens einem Wärmetauscher (242) einer ersten Kühleinrichtung (202) verbunden ist, und
- der Leitungsabschnitt (262), welcher einer zweiten Kühlmittelfördereinrichtung nachgeschaltet ist, mit dem mindestens einen Wärmetauscher (242) einer zweiten Kühleinrichtung (204) verbunden ist.

2. Kühlsystem nach Anspruch 1, wobei die Kühlmittelfördereinrichtungen eine voneinander unterschiedliche oder eine gleiche maximale Förderleistung aufweisen.

3. Kühlsystem nach einem der Ansprüche 1 bis 2, wobei die Kühlmittelfördereinrichtungen drehzahlgesteuerte Pumpen (236; 250, 252, 254) sind.

4. Kühlsystem nach einem der Ansprüche 1 bis 3, wobei in den den Kühlmittelfördereinrichtungen nachgeschalteten Leitungsabschnitten (240; 260, 262, 264) Durchflussregelelemente angeordnet sind.

5. Kühlsystem nach Anspruch 4, wobei die Durchflussregelelemente Rückschlagklappen (238; 270, 272) sind.

6. Kühlsystem nach einem der Ansprüche 1 bis 5, aufweisend mindestens eine Steuereinheit, die nach Maßgabe
- von Betriebszuständen der Kühleinrichtungen (202, 204),
- des Beladungszustands der Kühleinrichtungen (202, 204),
- von Umwelteinflüssen, und/oder
- der Förderleistung der Kühlmittelfördereinrichtungen,
die Zufuhr von Kühlmittel über die Regeleinheit und die Kühlmittelfördereinrichtungen regelt.

7. Verfahren zum Betreiben eines Kühlsystems nach einem der Ansprüche 1 bis 6, wobei über die Regeleinheit
- Kühlmittel der jeweils anderen Kühleinrichtung (202, 204) zugeführt wird, wenn mindestens eine der Kühlmittelfördereinrichtung der jeweiligen Kühleinrichtungen (202, 204) ausfällt oder deren Förderleistung unter eine Mindestfördermenge abfällt,
- die Kühlmittelfördermenge erhöht wird, wenn die benötigte Kühlleistung die maximale Förderleistung der Kühlmittelfördereinrichtungen der jeweiligen Kühleinrichtungen (202, 204) übersteigt oder neue Waren in mindestens einen der Warenräume (212) der Kühleinrichtungen (202, 204) eingebracht werden, und/oder
- die Kühlmittelzufuhr zu den Wärmetauschern (242) der Kühleinrichtungen (202, 204) erfolgt, wenn die benötigte Kühlleistung einen Kühlbedarf-Schwellenwert unterschreitet und die Kühlmittelfördereinrichtungen der jeweiligen Kühleinrichtungen (202, 204) nicht betrieben werden.

## Claims

1. Cooling system, comprising at least two separate cooling devices (202, 204) with at least one housing each, which at least partially surrounds a goods space (212), a coolant conveying device, and at least one heat exchanger (242), wherein the coolant conveying devices of the separate cooling devices (202, 204) control the supply of a coolant to the at least one heat exchanger (242), wherein
- the coolant conveying devices are coupled to one another via a regulating unit,
- the regulating unit is a coolant conveying device,
- the coolant conveying devices are connected in parallel and connected to a common coolant supply line,
- line sections (260, 262, 264) downstream of the coolant conveying devices in the direction of coolant flow are connected to one another upstream of the respective heat exchangers (242),
- the line section (260) downstream of a first coolant conveying device is connected to the at least one heat exchanger (242) of a first cooling device (202), and
- the line section (262) downstream of a second coolant conveying device is connected to the at least one heat exchanger (242) of a second cooling device (204).

2. Cooling device according to claim 1, wherein the cooling conveying devices comprise a different conveying capacity from one another or comprise a same maximum conveying capacity.

3. Cooling system according to one of the claims 1 to 2, wherein the coolant conveying devices are speed-controlled pumps (236; 250, 252, 254).

4. Cooling system according to one of the claims 1 to 3, wherein flow control elements are arranged in the line sections (240; 260, 262, 264) downstream of the coolant conveying devices.

5. Cooling system according to claim 4, wherein the flow control elements are non-return valves (238; 270, 272).

6. Cooling system according to one of the claims 1 to 5, comprising at least a control unit which regulates the supply of coolant via the regulating unit and the coolant conveying device in accordance
- with operating states of the cooling devices (202, 204),
- the loading state of the cooling devices (202, 204),
- environmental influences, and/or
- the conveying capacity of the coolant conveying devices.

7. Method for operating a cooling system according to one of the claims 1 to 6, wherein via the regulating unit
- coolant is supplied to the respective other cooling device (202, 204) if at least one of the coolant conveying devices of the respective cooling devices (202, 204) fails or its conveying capacity falls below a minimum conveying rate,
- the coolant conveying rate is increased if the required cooling capacity exceeds the maximum conveying capacity of the coolant conveying devices of the respective cooling devices (202, 204) or new goods are placed into at least one of the goods spaces (212) of the cooling devices (202, 204), and/or
- the coolant is supplied to the heat exchangers (242) of the cooling devices (202, 204) if the required cooling capacity falls below a cooling demand threshold and the coolant conveying devices of the respective cooling devices (202, 204) are not operated.

## Revendications

1. Système de refroidissement, présentant au moins deux dispositifs de refroidissement (202, 204) séparés avec au moins respectivement un logement, qui entoure au moins en partie un espace pour marchandises (212), un dispositif de transport de réfrigérant et au moins un échangeur de chaleur (242), dans lequel les dispositifs de transport de réfrigérant des dispositifs de refroidissement (202, 204) séparés régulent l'amenée d'un réfrigérant à l'au moins un échangeur de chaleur (242), dans lequel
- les dispositifs de transport de réfrigérant sont couplés les uns aux autres par l'intermédiaire d'une unité de régulation,
- l'unité de régulation est un dispositif de transport de réfrigérant,
- les dispositifs de transport de réfrigérant sont montés en parallèle et reliés à une conduite d'amenée de réfrigérant commune,
- des parties de conduite (260, 262, 264) montées en aval des dispositifs de transport de réfrigérant dans le sens d'écoulement de réfrigérant devant les échangeurs de chaleur (242) respectifs sont reliées les unes aux autres,
- la partie de conduite (260), laquelle est montée en aval d'un premier dispositif de transport de réfrigérant, est reliée à l'au moins un échangeur de chaleur (242) d'un premier dispositif de refroidissement (202), et
- la partie de conduite (262), laquelle est montée en aval d'un deuxième dispositif de transport de réfrigérant, est reliée à l'au moins un échangeur de chaleur (242) d'un deuxième dispositif de refroidissement (204).

2. Système de refroidissement selon revendication 1, dans lequel les dispositifs de transport de réfrigérant présentent une capacité de transport maximale différente l'une de l'autre ou une identique.

3. Système de refroidissement selon l'une quelconque des revendications 1 à 2, dans lequel les dispositifs de transport de réfrigérant sont des pompes (236 ; 250, 252, 254) à commande de vitesse de rotation.

4. Système de refroidissement selon l'une quelconque des revendications 1 à 3, dans lequel des éléments de régulation de débit sont disposés dans les parties de conduite (240 ; 260, 262, 264) montées en aval des dispositifs de transport de réfrigérant.

5. Système de refroidissement selon la revendication 4, dans lequel les éléments de régulation de débit sont des clapets de non-retour (238 ; 270 , 272).

6. Système de refroidissement selon l'une quelconque des revendications 1 à 5, présentant au moins une unité de commande, qui, en fonction
- des états de fonctionnement des dispositifs de refroidissement (202, 204),
- de l'état de charge des dispositifs de refroidissement (202, 204),
- des influences environnementales, et/ou
- de la capacité de transport des dispositifs de transport de réfrigérant,
régule l'amenée de réfrigérant par l'intermédiaire de l'unité de régulation et des dispositifs de transport de réfrigérant.

7. Procédé pour faire fonctionner un système de refroidissement selon l'une quelconque des revendications 1 à 6, dans lequel, par l'intermédiaire de l'unité de régulation
- un réfrigérant est amené à l'autre dispositif de refroidissement (202, 204) respectif, lorsqu'au moins un des dispositifs de transport de réfrigérant des dispositifs de refroidissement (202, 204) respectifs tombe en panne ou la capacité de transport de celui-ci chute au-dessous d'une quantité de transport minimale,
- la quantité de transport de réfrigérant est augmentée lorsque la capacité de refroidissement nécessaire dépasse la capacité de transport maximale des dispositifs de transport de réfrigérant des dispositifs de refroidissement (202, 204) respectifs ou de nouvelles marchandises sont introduites dans au moins un des espaces pour marchandises (212) des dispositifs de refroidissement (202, 204), et/ou
- l'amenée de réfrigérant aux échangeurs de chaleur (242) des dispositifs de refroidissement (202, 204) s'effectue lorsque la capacité de refroidissement nécessaire passe au-dessous d'une valeur seuil de besoin en refroidissement et les dispositifs de transport de réfrigérant des dispositifs de refroidissement (202, 204) respectifs ne fonctionnent pas.
